(19) Europäisches Patentamt
European Patent Office
Office européen des brevets

(11) EP 4 682 188 A1

(12) **EUROPEAN PATENT APPLICATION**
published in accordance with Art. 153(4) EPC

(43) Date of publication:
**21.01.2026 Bulletin 2026/04**

(21) Application number: **24771032.0**

(22) Date of filing: **04.01.2024**

(51) International Patent Classification (IPC):
***C08J 5/22*** *(2006.01)* ***C08L 23/08*** *(2025.01)*
***C08L 101/00*** *(2006.01)* ***H01M 8/102*** *(2016.01)*
***C25B 1/04*** *(2021.01)* ***H01M 8/10*** *(2016.01)*

(52) Cooperative Patent Classification (CPC):
**C08J 5/22; C08L 23/08; C08L 101/00; C25B 1/04; H01M 8/10; H01M 8/102;** Y02E 60/50

(86) International application number:
**PCT/KR2024/000197**

(87) International publication number:
**WO 2024/191030 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.03.2023 KR 20230032909**

(71) Applicant: **Korea Institute of Science and Technology**
**Seoul 02792 (KR)**

(72) Inventors:
- **LEE, Albert Sung Soo**
  **Seoul 02792 (KR)**
- **HWANG, Seung Sang**
  **Seoul 02792 (KR)**
- **KIM, Seon Joon**
  **Seoul 02792 (KR)**
- **OH, Taegon**
  **Seoul 02792 (KR)**
- **JUNG, Ji Yoon**
  **Seoul 02792 (KR)**
- **PARK, Young Sang**
  **Seoul 02792 (KR)**
- **KU, Jinsuk**
  **Seoul 02792 (KR)**
- **KIM, Junggyu**
  **Seoul 02792 (KR)**

(74) Representative: **advotec.**
**Patent- und Rechtsanwaltspartnerschaft mbB**
**Widenmayerstraße 4**
**80538 München (DE)**

(54) **ANION EXCHANGE MEMBRANE AND METHOD FOR MANUFACTURING SAME**

(57) The present specification pertains to an anion exchange membrane and a method for manufacturing same. An electrochemical catalyst according to an embodiment of the present invention has the effect of exhibiting high ion exchange ability and excellent mechanical strength.

【FIG. 1】

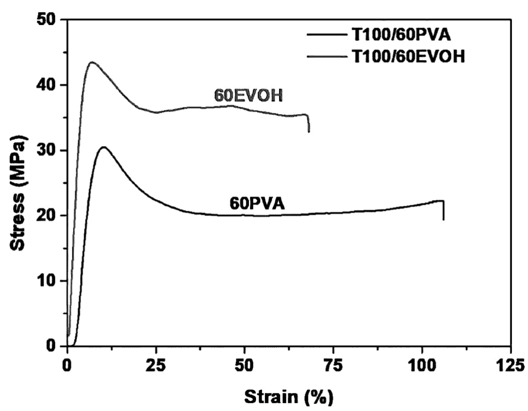


EP 4 682 188 A1

## Description

[Technical Field]

The present invention was made under the support of the Ministry of Science and ICT of the Republic of Korea, by project number 1711156125, wherein a research management specialized agency of the above project is the National Research Foundation of Korea, a research program name is "Development of reactive nanocomposite filter materials technology for removal of hazardous substances in semiconductor/electronic industry", and a research period is from January 1, 2022, to December 31, 2022.

The present invention was made under the support of the Ministry of Science and ICT of the Republic of Korea, by project number 1711175402, wherein a research management specialized agency of the above project is the National Research Council of Science and Technology, a research program name is "Development of highfrequency/high-power electromagnetic wave solution materials and components technology for securing motion reliability of future mobility", and a research period is from May 1, 2022, to December 31, 2022.

In the present specification, an anion exchange membrane and a method for manufacturing the same are disclosed.

[Background Art]

Due to depletion of fossil fuels and climate change, renewable energy is attracting attention, and an electrolysis technology for producing hydrogen by using electricity of renewable energy is being used. Hydrogen is a very useful raw material and may be used as a fuel of various types of fuel cells. A structure of such a water electrolysis device and a fuel cell is formed in a structure in which an electrolyte membrane composed of a polymer material is centered, and an oxidation electrode and a reduction electrode are applied on both sides, which is called a membrane electrode assembly (MEA). A separator included in the above membrane electrode assembly is required to have excellent alkaline durability in order to be driven in an alkaline environment, but in the case of a current material, there are difficulties in application since structures vulnerable to alkaline are included, and there is a problem that durability is insufficient. In particular, a structure including an aryl-ether structure is vulnerable under alkaline conditions since being attacked by a hydroxyl ion. Therefore, development of a separator not including the aryl-ether structure is required.

In this regard, in Korean Patent No. 10-2014970, a polymer including a long-chain alkyl group on a side chain of a main chain polymer and a quaternary ammonium group functioning as an ion conductor is synthesized, and an additive capable of inducing physical crosslinking with the above polymer is added thereto, thereby providing an anion exchange membrane (polymer membrane) capable of simultaneously securing high ion conductivity and chemical stability. However, the anion exchange membrane is required to have good mechanical strength at the same time as conduction of hydroxyl ion is possible. However, in the separator according to the related art, when ion conductivity is high, water absorptivity increases, thereby causing a problem that mechanical stability of a membrane is reduced.

[Documents of Related Art]

[Patent Document]

Korean Laid-Open Patent Publication No. 10-2014970

[Disclosure]

[Technical Problem]

An object according to one aspect of the present invention is to provide an anion exchange membrane having high ion exchange capability and at the same time excellent mechanical strength, and a method for manufacturing the same.

[Technical Solution]

In one aspect of the present invention, the present invention provides an anion exchange membrane comprising a cationic polymer and an ethylene-vinyl alcohol copolymer (EVOH), wherein the cationic polymer and the ethylene-vinyl alcohol copolymer (EVOH) form an interpenetrating polymer network.

In another aspect, the present invention provides a membrane electrode assembly comprising the anion exchange membrane.

In another aspect, the present invention provides a water electrolysis device comprising the membrane electrode assembly.

In another aspect, the present invention provides a fuel cell comprising the membrane electrode assembly.

In another aspect, the present invention provides a method for manufacturing the anion exchange membrane, comprising: mixing a cationic polymer solution and an ethylene-vinyl alcohol copolymer (EVOH) solution to obtain a mixture; and casting and drying the mixture on a glass plate to form an interpenetrating polymer network of the cationic polymer and the ethylene-vinyl alcohol copolymer (EVOH).

[Advantageous Effects]

An electrochemical catalyst according to an embodiment of the present invention has the effect of exhibiting high ion exchange capability and excellent mechanical strength.

[Description of Drawings]

FIG. 1 is a graph showing a result of measuring mechanical strength of an anion exchange membrane according to an embodiment of the present invention.

FIG. 2 is a graph showing a result of measuring mechanical strength by EVOH content of an anion exchange membrane according to an embodiment of the present invention.

FIG. 3 is a graph showing a result of evaluating ion exchange capability of an anion exchange membrane according to an embodiment of the present invention.

FIG. 4 is a graph showing a result of evaluating ion exchange capability according to immersion time in an alkaline aqueous solution of an anion exchange membrane and a commercial FAA-3 separator according to an embodiment of the present invention.

FIG. 5 is a graph showing a result of evaluating ion conductivity retention according to immersion time in an alkaline aqueous solution of an anion exchange membrane and a commercial FAA-3 separator according to an embodiment of the present invention.

FIG. 6 is a graph showing water electrolysis performance, an I-V curve of an anion exchange membrane according to an embodiment of the present invention.

[Mode for Disclosure]

Hereinafter, exemplary embodiments of the present invention will be described in detail with reference to the accompanying drawings.

The embodiments of the present invention disclosed herein are illustrated for purposes of description only, and the embodiments of the present invention may be practiced in various forms and should not be interpreted as limiting to the embodiments described herein. The present invention is subject to various modifications and may have various forms, and the embodiments are not intended to limit the present invention to any particular disclosure form, but are to be understood to include all modifications, equivalents, or substitutions that fall within the scope of the teachings and art of the present invention.

Throughout the specification, unless explicitly described to the contrary, the word "comprise" or "include" and variations, such as "comprises", "comprising", "includes" or "including", means the further inclusion of stated constituent elements, not the exclusion of any other constituent elements.

Throughout the specification, the same constituent elements are denoted by the same reference numerals. Throughout the specification, when one component such as a layer, a film, a region, or a plate is described as being positioned "above" or "on" another component, one component can be positioned "directly on another component, and one component can also be positioned on another component with other components interposed therebetween. Throughout the specification, the terms such as "first," "second," and other numerical terms may be used herein only to describe various elements, but these elements should not be limited by these terms. These terms are used only to distinguish one constituent element from another constituent element.

## Anion exchange membrane

In one aspect of the present invention, the present invention provides an anion exchange membrane comprising a cationic polymer and an ethylene-vinyl alcohol copolymer (EVOH), wherein the cationic polymer and the ethylene-vinyl alcohol copolymer (EVOH) form an interpenetrating polymer network.

In general, polyvinyl alcohol (PVA) has inherent excellent film formability and biodegradability, and since being inexpensive and exhibiting good chemical stability, it is applied to practical fields such as a polarizing film. In particular, when being applied as an anion exchange membrane by adding KOH, the polyvinyl alcohol has hydroxyl groups in a polymer backbone and thus exhibits hydrophilicity, thereby having good hydroxyl ion transportability. However, the polyvinyl alcohol exhibits high alkaline solution absorptivity, so that mechanical stability decreases. In addition, since it is soluble in water and having a glass transition temperature of 60°C, it cannot be applied at a high temperature of 60°C or more.

Accordingly, the inventors of the present invention have completed the present invention by finding that, when using an anion exchange membrane based on an ethylene-vinyl alcohol copolymer (EVOH), both ion conductivity and mechanical strength may be increased. The inventors have developed an anion separation membrane of an interpenetrating polymer network through a blend of an ethylene-vinyl alcohol copolymer (EVOH), which exhibits excellent mechanical properties while dissociating ions, and a cationic polymer capable of anion exchange.

The cationic polymer and the ethylene-vinyl alcohol copolymer (EVOH) form an interpenetrating polymer network. The interpenetrating polymer network is physically entangled with networks of two crosslinked polymers, and thus has properties of crosslinked polymers such as chemical resistance, solvent resistance, and heat resistance, and a synergistic effect of physical properties or properties of a polymer blend of amphiphilicity. In addition, a morphology of the interpenetrating polymer network may be changed during a synthesis process by changing synthesis conditions (for example, synthesis temperature, pressure, catalyst concentration, solvent, crosslinking density), and unlike polymer blends or block copolymers, once formed, the morphology may be maintained due to physical entanglement between crosslinked structures. This not only enables direct ion conduction through an ionic functional group, but also exhibits higher ion conductivity by adding proton conduction based on a Grotthuss conduction model induced by a hydroxyl functional group in an ion dissociable polymer.

In an embodiment, the cationic polymer is a copolymer of a primary halide and a tertiary amine, or a copolymer of diallyl amine and a cationic network polymer precursor (CNPP).

In an embodiment, the cationic polymer is a crosslinked polymer formed through a Menshutkin reaction of a primary halide and a tertiary amine. Through a Menshutkin reaction, a primary halide converts a tertiary amine into a quaternary ammonium salt, and through this, a crosslinked form of a polymer is formed. In order to form such a crosslinked form of a polymer, a monomer including three or more primary halides and a monomer including two or more tertiary amines, or a monomer including two or more primary halides and a monomer including three or more tertiary amines should be used.

Examples of the above primary halide include compounds represented by structural formulas of the following Chemical Formula 2 to 6.

[Chemical Formula 2]

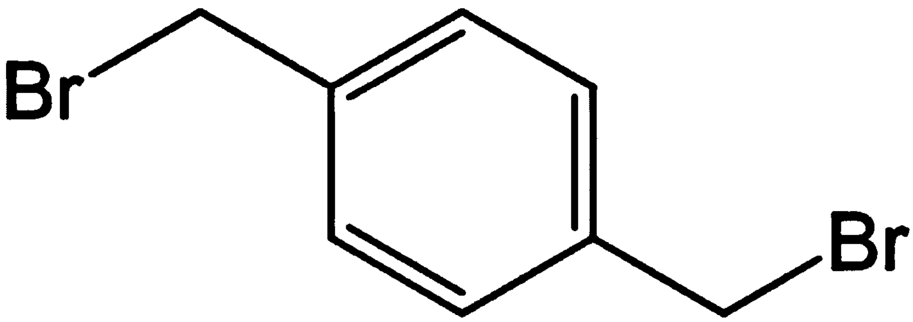

[Chemical Formula 3]

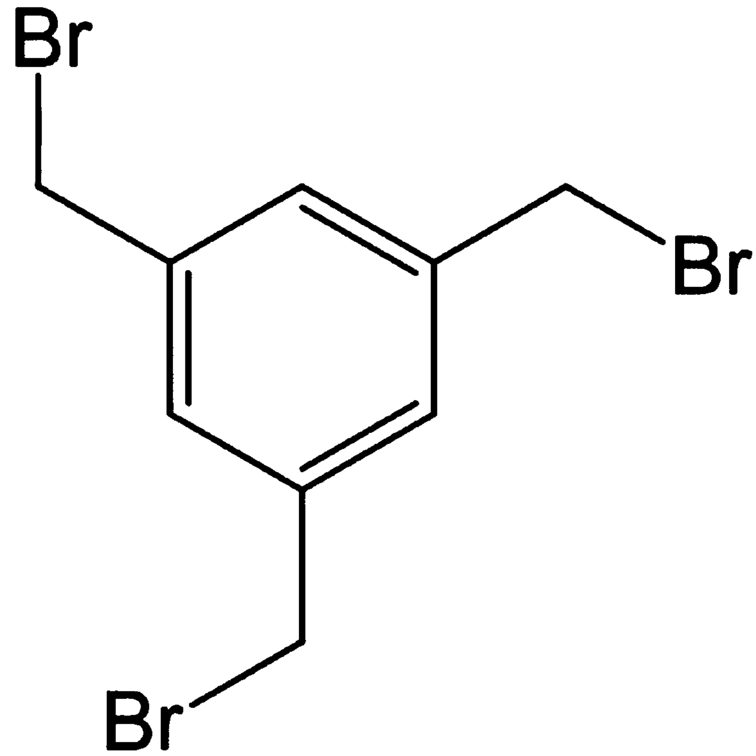

[Chemical Formula 4]

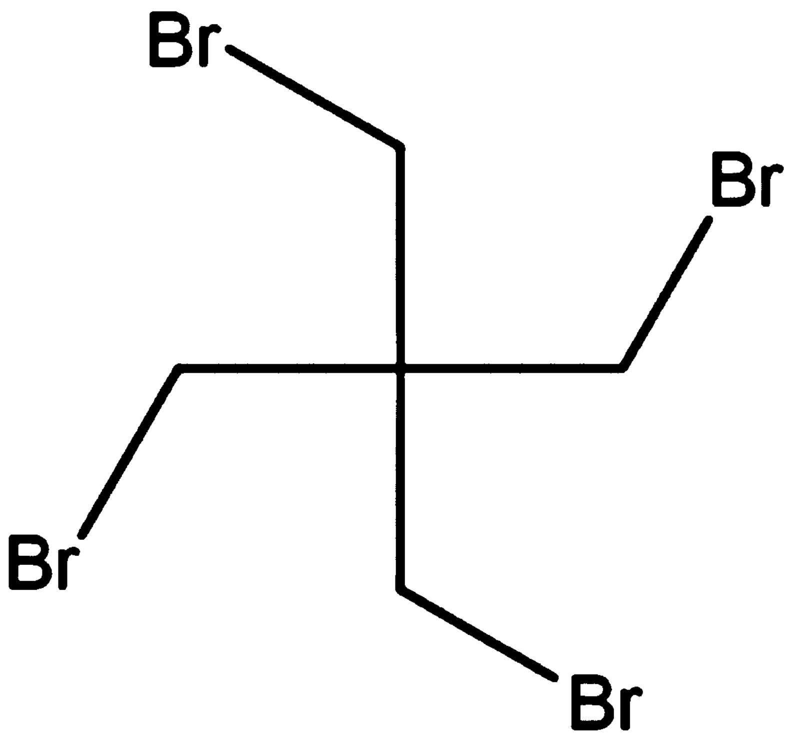

[Chemical Formula 5]

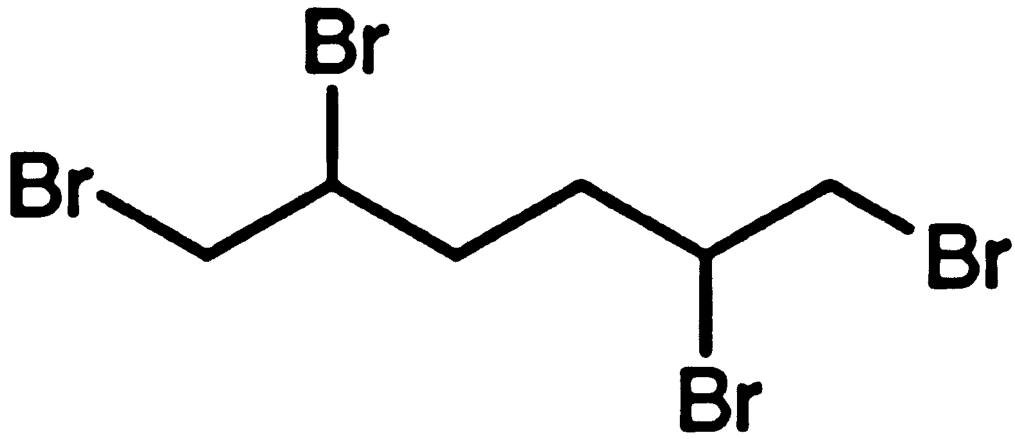

[Chemical Formula 6]

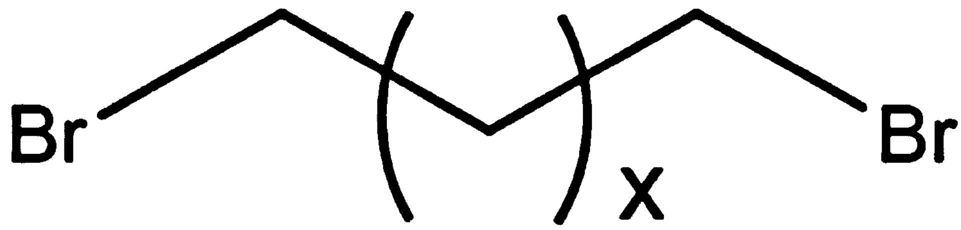

Examples of the above tertiary amine include compounds represented by structural formulas of the following Chemical Formula 7 to 10.

[Chemical Formula 7]

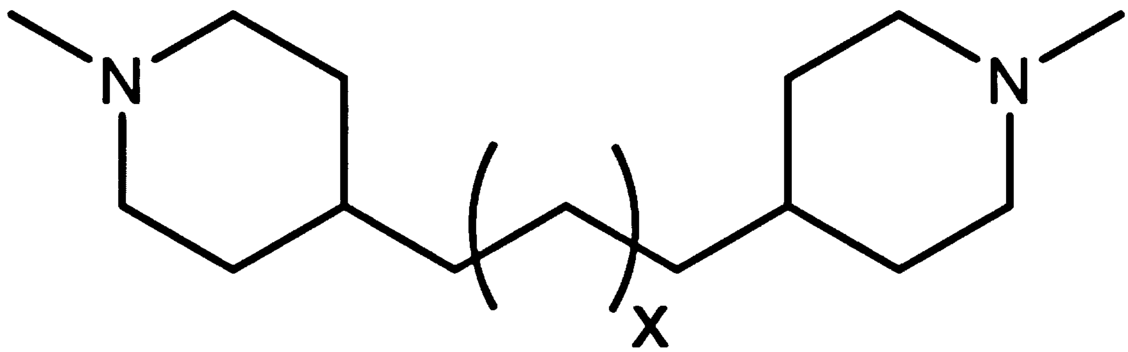

(wherein x is an integer of 0 or more).

[Chemical Formula 8]

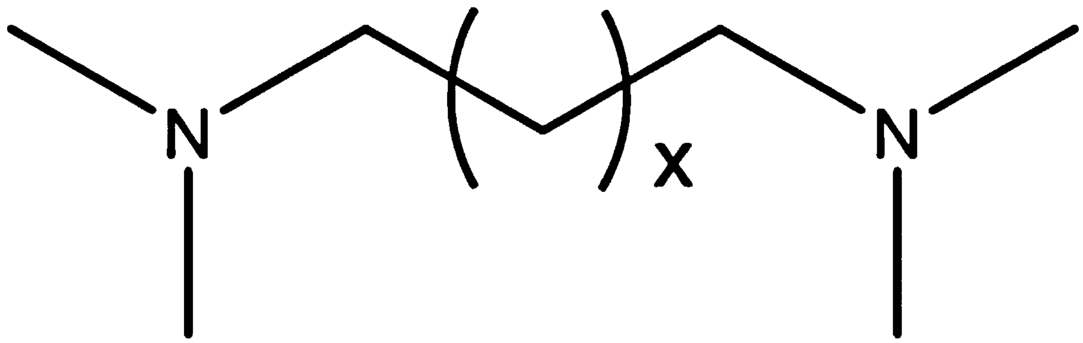

(wherein x is an integer of 0 or more).

[Chemical Formula 9]

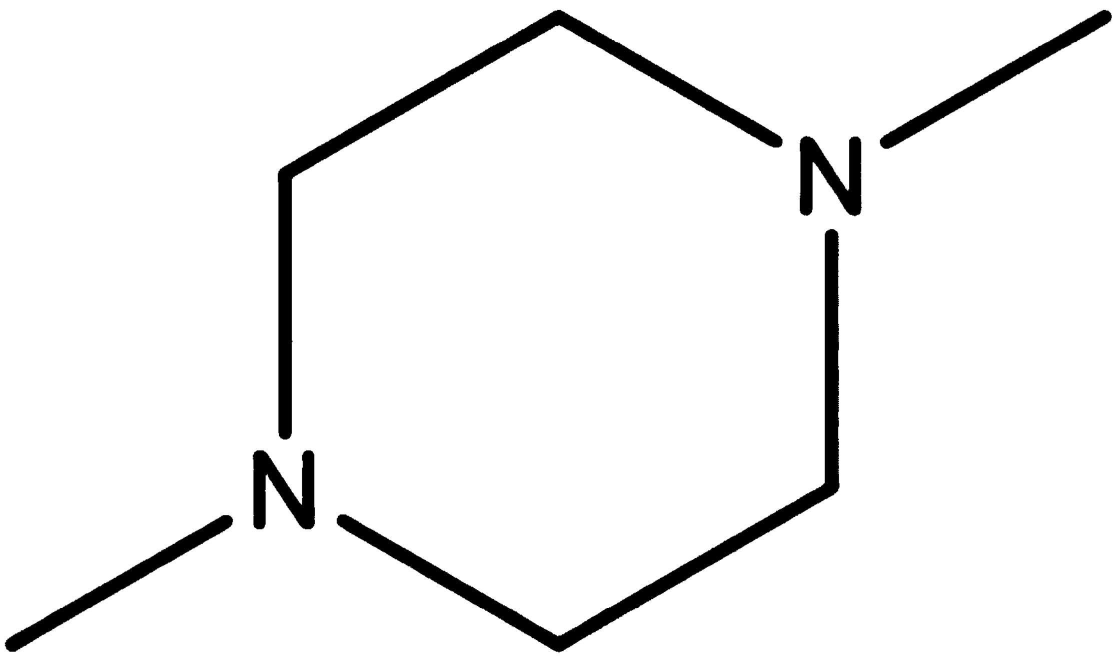

[Chemical Formula 10]

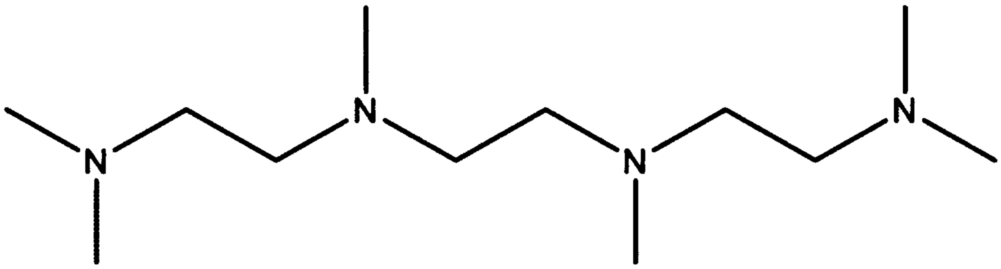

In an embodiment, the cationic polymer is a copolymer of diallyl amine and a cationic network polymer precursor (CNPP).

In an embodiment, the cationic polymer is a crosslinked form of a polymer formed through cyclopolymerization of diallyl amine and a cationic network polymer precursor (CNPP).

In an embodiment, the cationic network polymer precursor (CNPP) is a compound including three or more ammonium groups. Examples of the above cationic network polymer precursor (CNPP) include compounds represented by structural formulas of the following Chemical Formula 11 to 15.

[Chemical Formula 11]

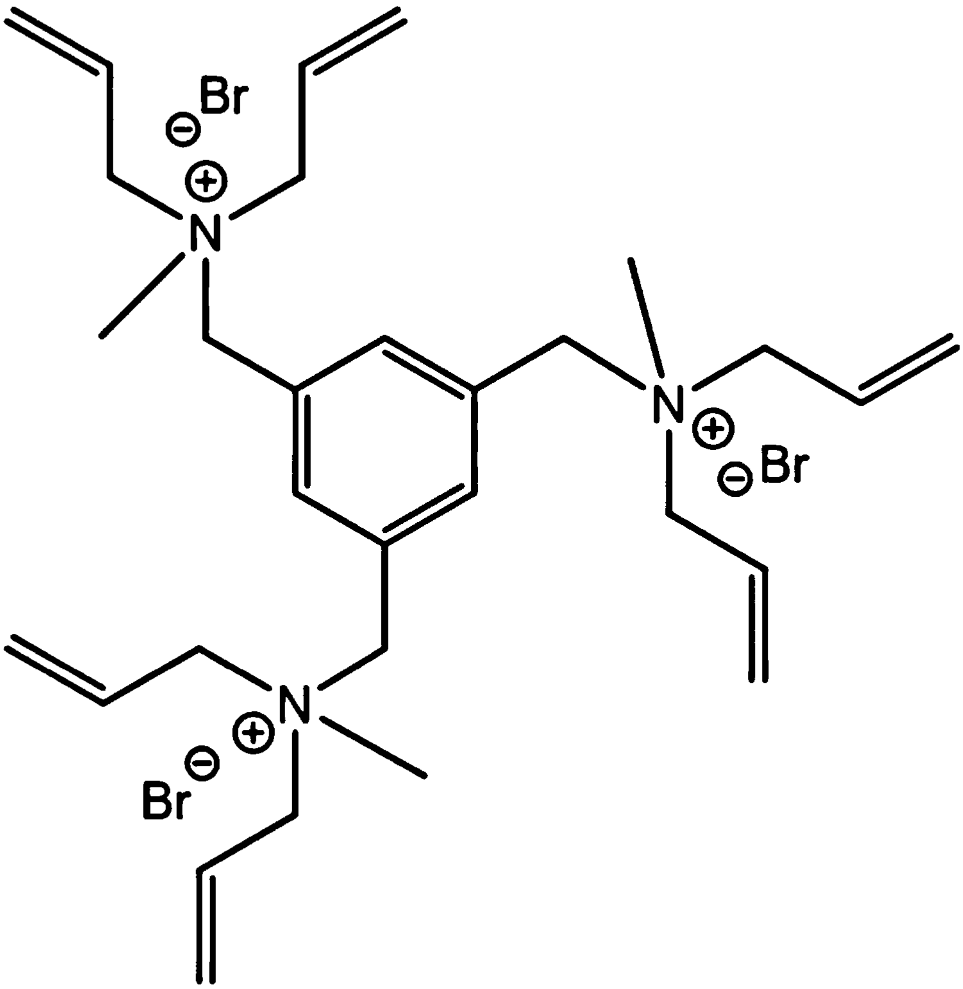

[Chemical Formula 12]

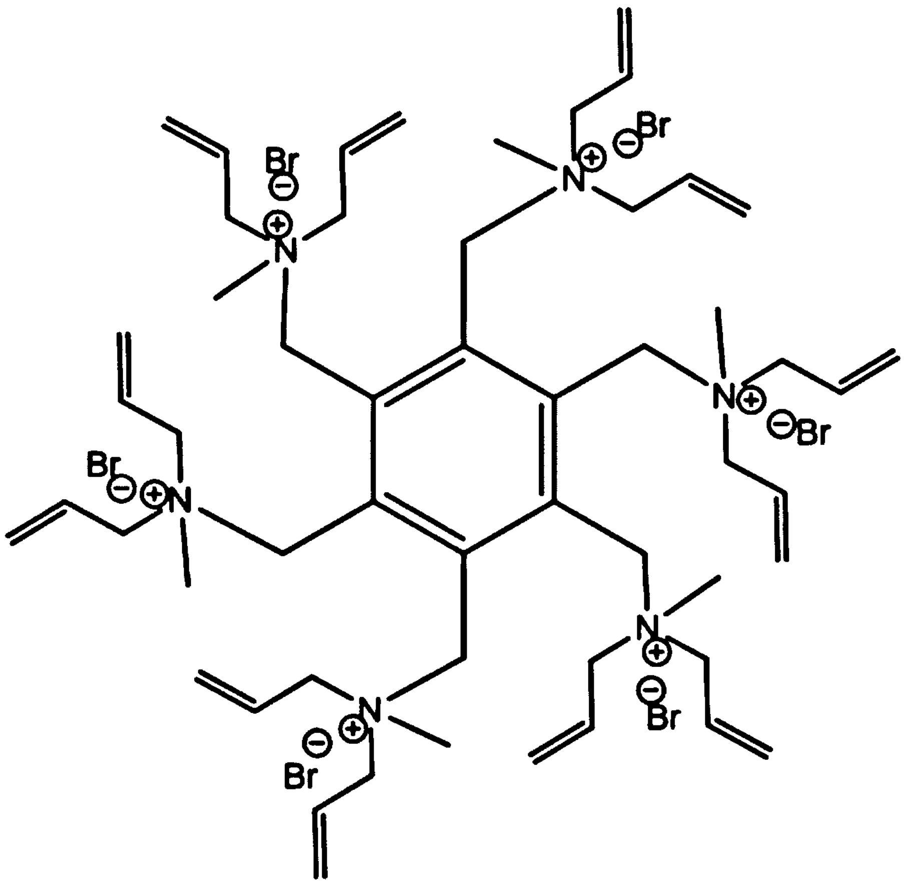

[Chemical Formula 13]

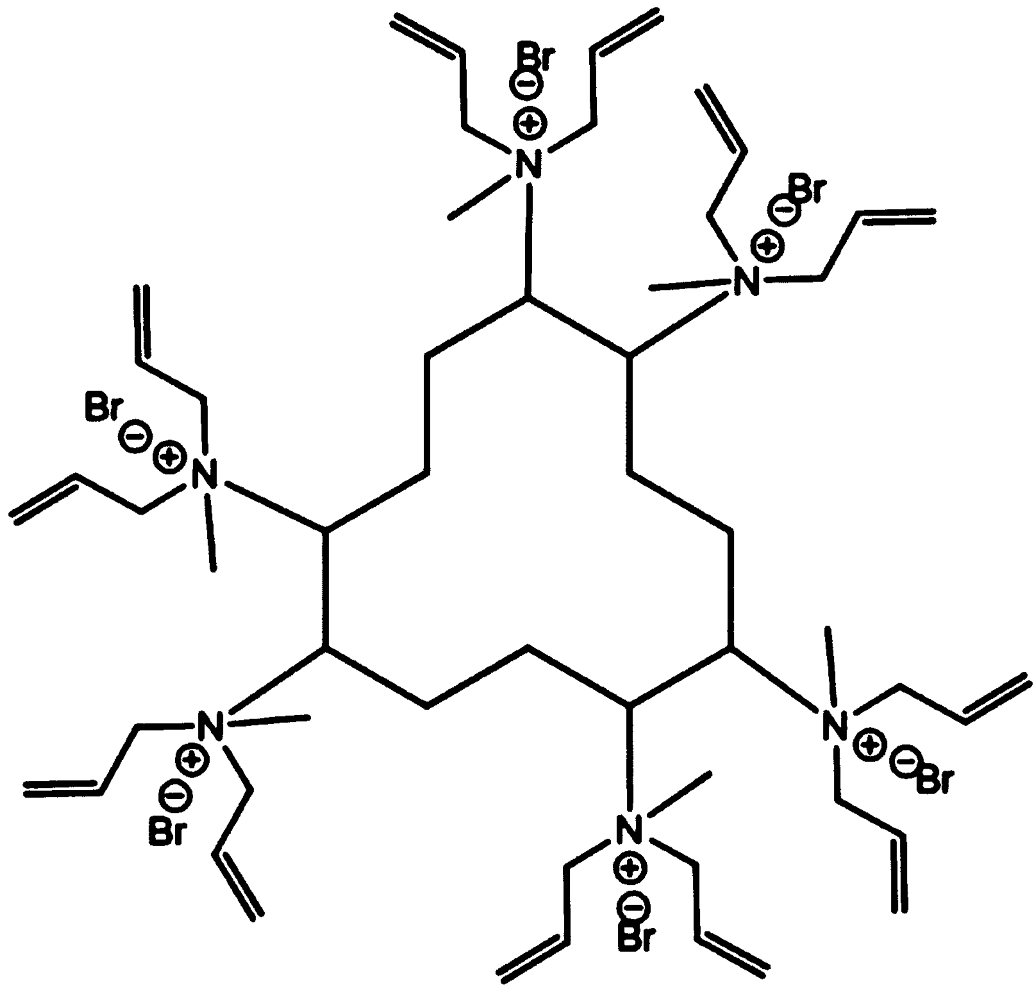

[Chemical Formula 14]

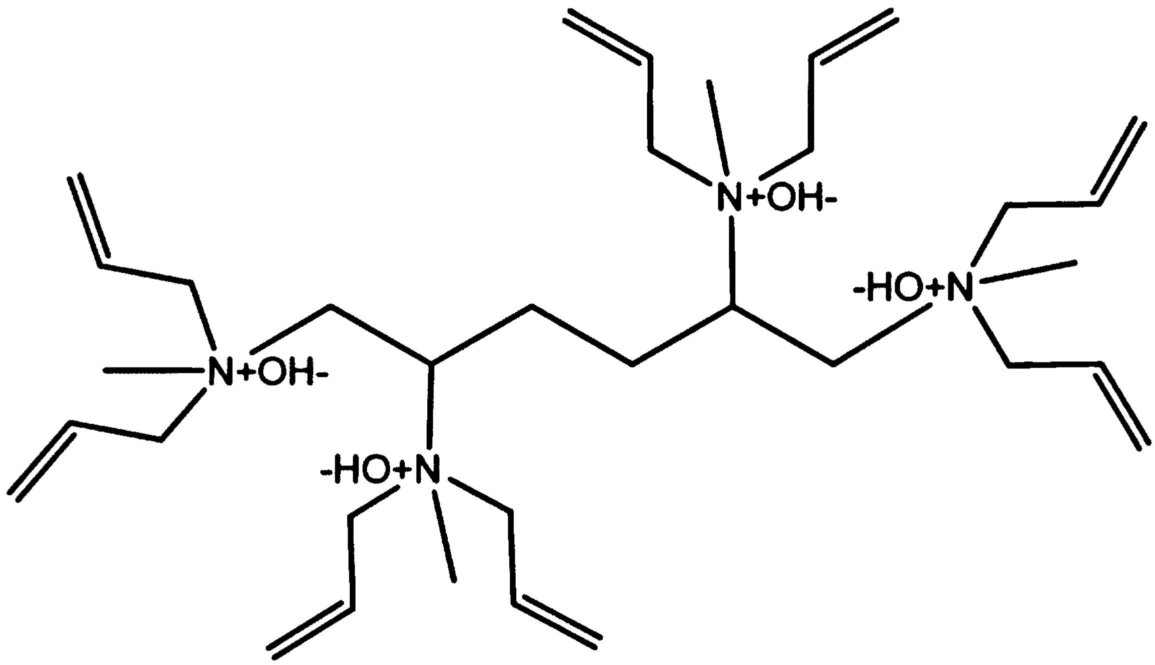

[Chemical Formula 15]

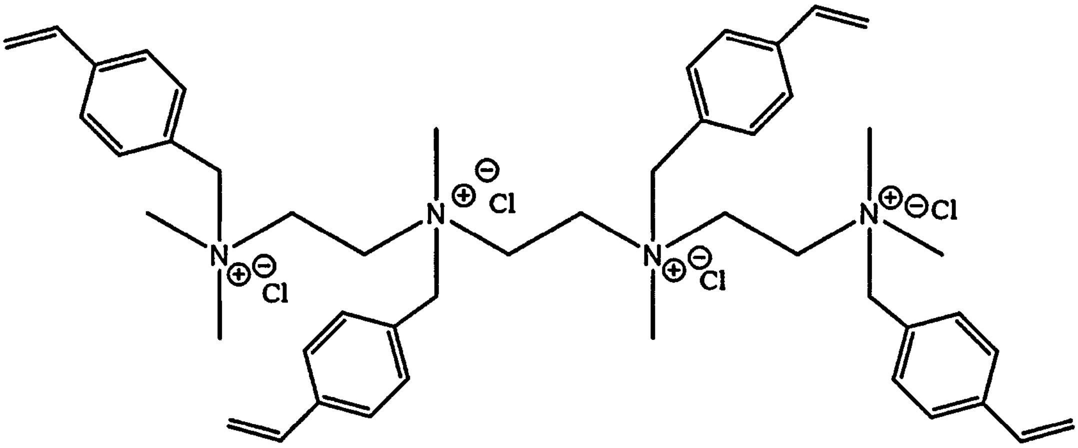

In an embodiment, the cationic network polymer precursor (CNPP) is a compound including three or more diallyl methyl amine functional groups.

In an embodiment, the diallyl amine is diallyl dialkyl ammonium chloride represented by the following Chemical Formula 1.

[Chemical Formula 1]

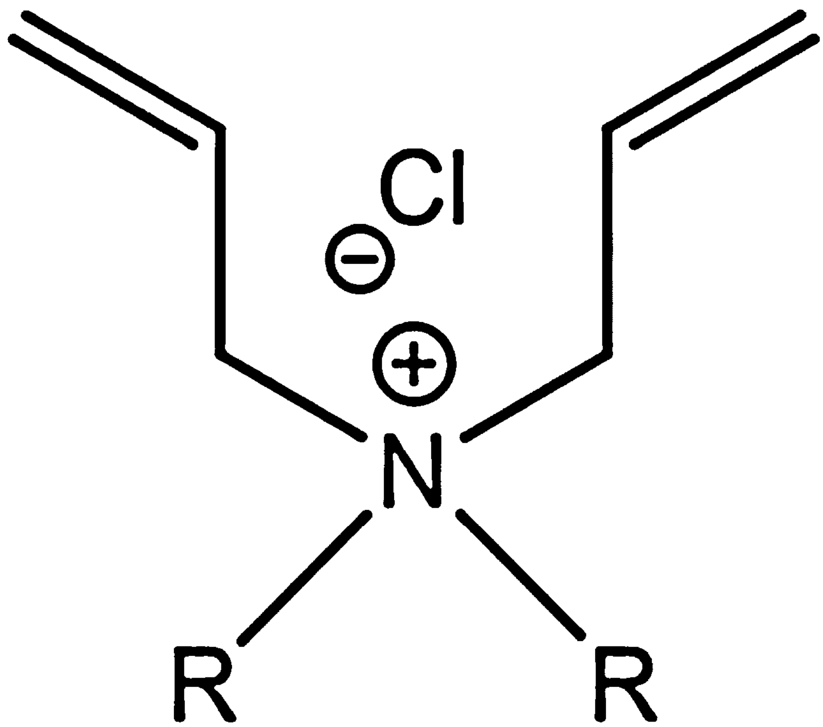

In Chemical Formula 1, R is $-(CH_2)_xCH_3$, $-(CH_2)_x(CF_2)_yCF_3$, or

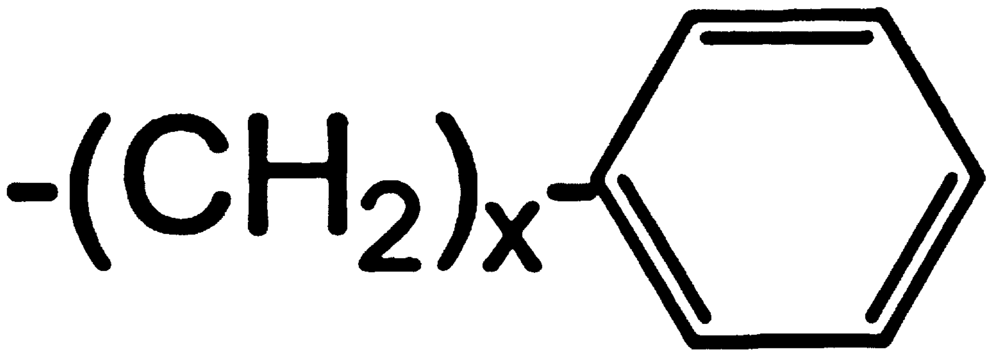

(wherein x and y are each independently an integer of 0 or more). More specifically, R is methyl, n-alkyl, fluoroalkyl, phenyl, or benzyl.

In an embodiment, a content of the ethylene-vinyl alcohol copolymer (EVOH) is 5 to 65 wt% based on a total weight of an anion exchange membrane. More specifically, the content of the ethylene-vinyl alcohol copolymer (EVOH) may be 5 wt% or more, 10 wt% or more, 15 wt% or more, 20 wt% or more, 25 wt% or more, 30 wt% or more; 65 wt% or less, 60 wt% or less, 55 wt% or less, 50 wt% or less, 45 wt% or less, 40 wt% or less, 35 wt% or less, or 30 wt% or less, based on the total weight of the anion exchange membrane, but not limited thereto.

By adjusting a content ratio of the cationic polymer and the ethylene-vinyl alcohol copolymer (EVOH), ion exchange capability may be controlled, and by increasing the ion exchange capability, ion conductivity of the anion exchange membrane according to an embodiment of the present invention may be increased.

In an embodiment, an ethylene unit content of the ethylene-vinyl alcohol copolymer (EVOH) is 0 to 60 mol%. The ethylene unit content of the ethylene-vinyl alcohol copolymer (EVOH) has no limitation at a lower limit, and more specifically, may be 0 mol% or more, 5 mol% or more, 10 mol% or more, 15 mol% or more, 20 mol% or more, 25 mol% or more, 30 mol% or more, or 32 mol% or more; 60 mol% or less, 55 mol% or less, 50 mol% or less, 45 mol% or less, 40 mol% or less, 35 mol% or less, or 32 mol% or less, but not limited thereto. When an ethylene content exceeds the above lower limit, there may be a concern that gas barrier property is insufficient.

In an embodiment, the cationic polymer and the ethylene-vinyl alcohol copolymer (EVOH) do not include an aryl-ether bond. A structure including an aryl-ether structure is vulnerable under alkaline conditions since being attacked by a hydroxyl ion. This may block holes of a gas diffusion layer that deteriorates ion conductivity and cell performance not only in anion exchange membrane water electrolysis but also in an anion exchange membrane fuel cell. The inventors have found that, when an ionomer includes an aryl-ether structure, being vulnerable under alkaline conditions since being attacked by a hydroxyl ion, and thus performance of a cell decreases, and have invented an anion exchange membrane not including an aryl-ether structure.

**Membrane electrode assembly, Water electrolysis device and Fuel cell**

In another aspect, the present invention provides a membrane electrode assembly (MEA) comprising the above anion exchange membrane. More specifically, the present invention provides a membrane electrode assembly comprising: a reduction electrode; an oxidation electrode positioned opposite to the reduction electrode; and the anion exchange membrane positioned between the reduction electrode and the oxidation electrode.

In another aspect, the present invention provides a water electrolysis device comprising the membrane electrode assembly. Hydrogen energy by a water electrolysis device has advantages of high efficiency, abundant fuel (water), and no emission of pollutants such as nitrogen oxides (NOx) or sulfur oxides (SOx). Hydrogen may be produced by electrolyzing pure water or by electrolyzing an alkaline aqueous solution.

In another aspect, the present invention provides a fuel cell comprising the membrane electrode assembly. The above fuel cell may be a polymer electrolyte membrane fuel cell (PEMFC). The above polymer electrolyte membrane fuel cell is a device that converts chemical energy into electrical energy, may utilize energy with higher efficiency compared to a conventional internal combustion engine, and is a clean energy source in which environmental pollutants such as carbon dioxide, nitrogen oxides, and sulfur oxides are not emitted in an energy conversion process.

**Method for manufacturing an anion exchange membrane**

In another aspect, the present invention provides a method for manufacturing the anion exchange membrane, comprising: mixing a cationic polymer solution and an ethylene-vinyl alcohol copolymer (EVOH) solution to obtain a mixture; and casting and drying the mixture on a glass plate to form an interpenetrating polymer network of the cationic polymer and the ethylene-vinyl alcohol copolymer (EVOH).

According to the present invention, the anion exchange membrane may be manufactured by a simple method of preparing and mixing the cationic polymer solution and the ethylene-vinyl alcohol copolymer (EVOH) solution, optionally an initiator, and then casting and heating.

In an embodiment, the initiator is one or more selected from the group consisting of 1,1'-azobis(cyclohexanecarbonitrile) (ACHN), 2,2'-azobis(2-methylpropionamidine) dihydrochloride (AAPH), 4,4'-azobis(4-cyanovaleric acid) (ACVA), 2,2'-azobisisobutyronitrile (AIBN), 2,2'-azobis-(2,4-dimethylvaleronitrile), 2,2'-azobis-(4-methoxy-2,4-dimethylvaleronitrile), benzoyl peroxide, lauroyl peroxide, t-butyl peroxypivalate, and 1,1'-bis-(bis-t-butylperoxy)cyclohexane.

In an embodiment, the method further comprises: crosslinking hydroxyl groups of the ethylene-vinyl alcohol copolymer (EVOH) by mixing a glutaraldehyde crosslinking agent. The glutaraldehyde crosslinking agent may improve mechanical stability of the anion exchange membrane by crosslinking a part or all of hydroxyl groups of the ethylene-vinyl alcohol copolymer (EVOH).

[Mode for carrying out invention]

Hereinafter, the present invention will be described in detail with reference to preferred embodiments so that those of ordinary skill in the art to which the present invention pertains may readily carry out the present invention. However, the present invention may be implemented in various different ways and is not limited to the embodiments described herein.

## {EXAMPLES}

All reagents and materials were purchased from Sigma Aldrich and used.

### <Manufacturing Example 1> Preparation of anion exchange membrane according to the present invention (Example 1)

A mixture was obtained by mixing a cationic polymer solution including compounds of the following Chemical Formula 16 and an ethylene-vinyl alcohol copolymer (EVOH) solution having an ethylene unit content of 32 mol%.

[Chemical Formula 16]

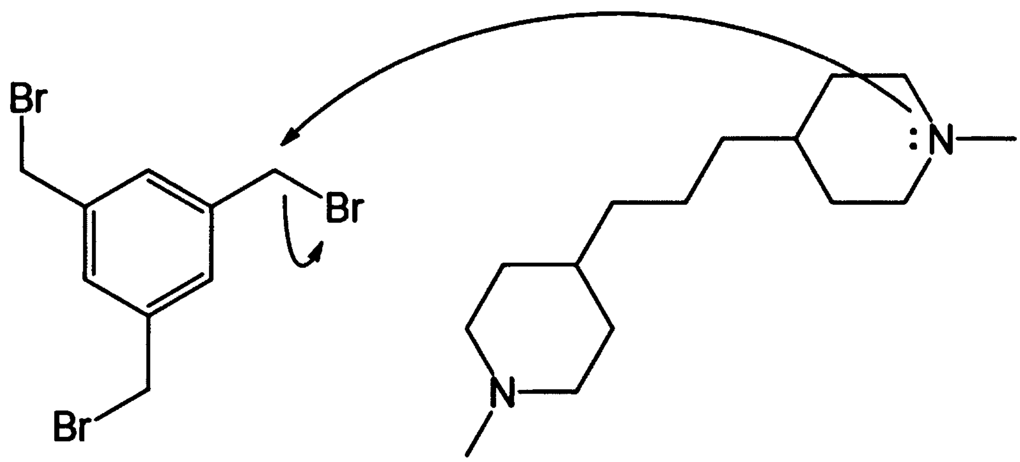

Subsequently, the above mixture was cast on a glass plate and dried at 80°C to form an interpenetrating polymer network of the cationic polymer and the ethylene-vinyl alcohol copolymer (EVOH) as shown in the following Chemical Formula 17.

[Chemical Formula 17]

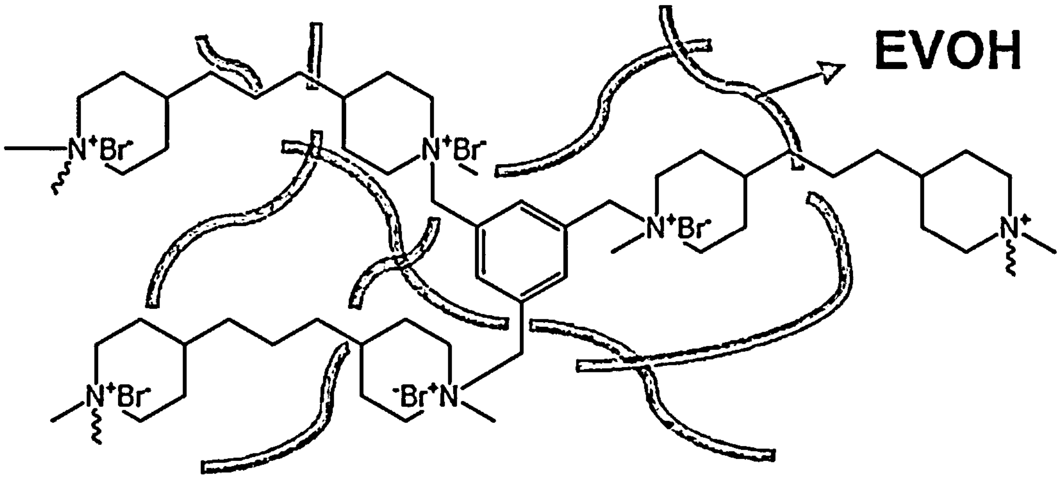

Subsequently, by mixing a glutaraldehyde crosslinking agent to crosslink hydroxyl groups of the ethylene-vinyl alcohol copolymer (EVOH), the anion exchange membrane according to Example 1 was manufactured.

**<Manufacturing Example 2> Preparation of anion exchange membrane according to the present invention (Example 2)**

A mixture was obtained by mixing a cationic polymer solution including diallyl amine of the following Chemical Formula 1 and a cationic network polymer precursor (CNPP) of the following Chemical Formula 11, an ethylene-vinyl alcohol copolymer (EVOH) solution having an ethylene unit content of 32 mol%, and 2,2'-azobis(2-methylpropionamidine) dihydrochloride (AAPH) as an initiator.

[Chemical Formula 1]

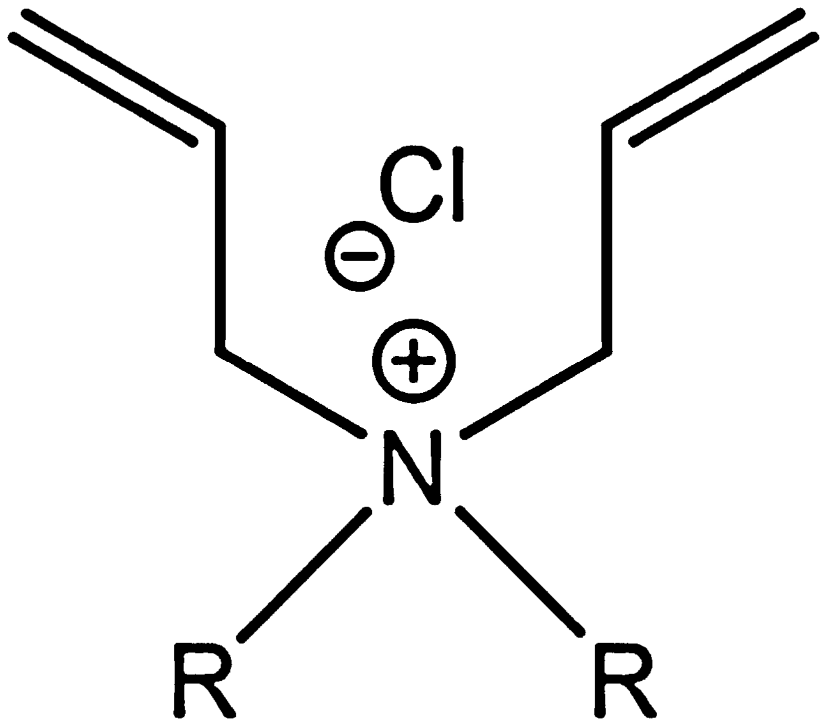

In Chemical Formula 1, R is methyl.

[Chemical Formula 11]

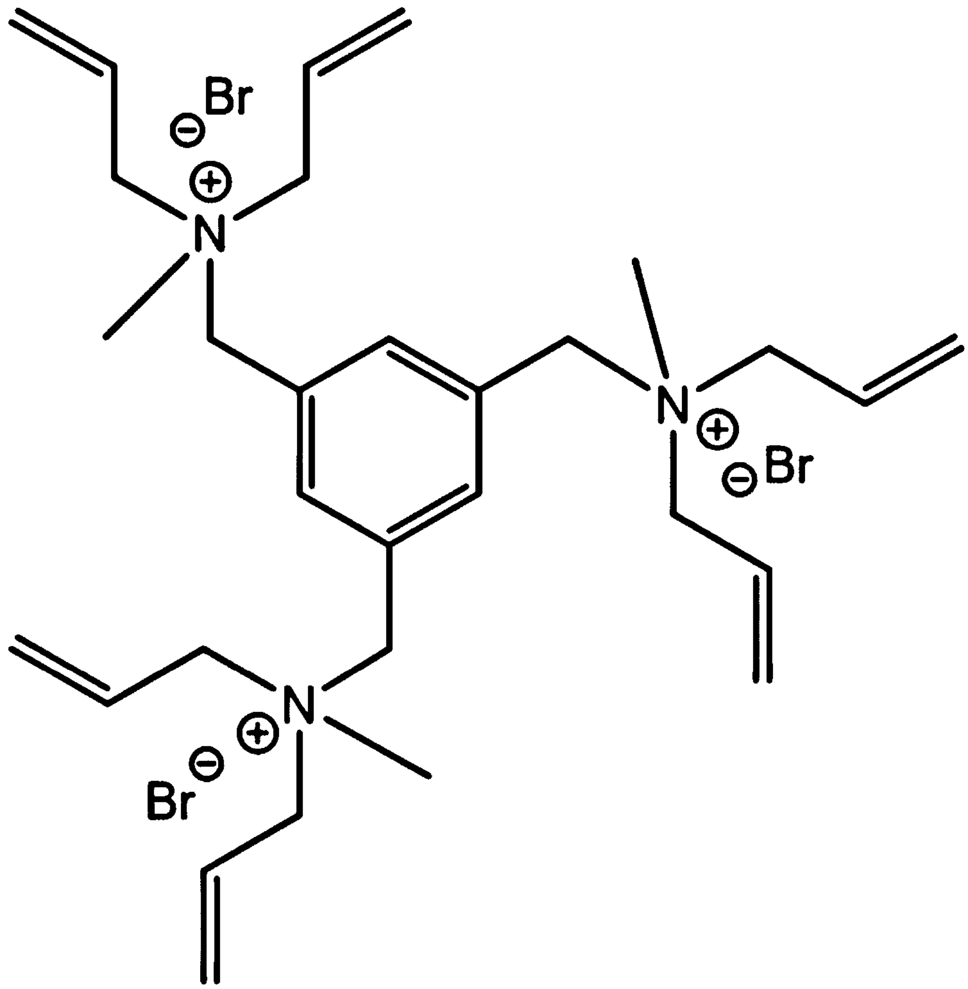

Subsequently, the above mixture was cast on a glass plate and dried at 80°C to form an interpenetrating polymer network of the cationic polymer and the ethylene-vinyl alcohol copolymer (EVOH) as shown in the following Chemical Formula 18.

[Chemical Formula 18]

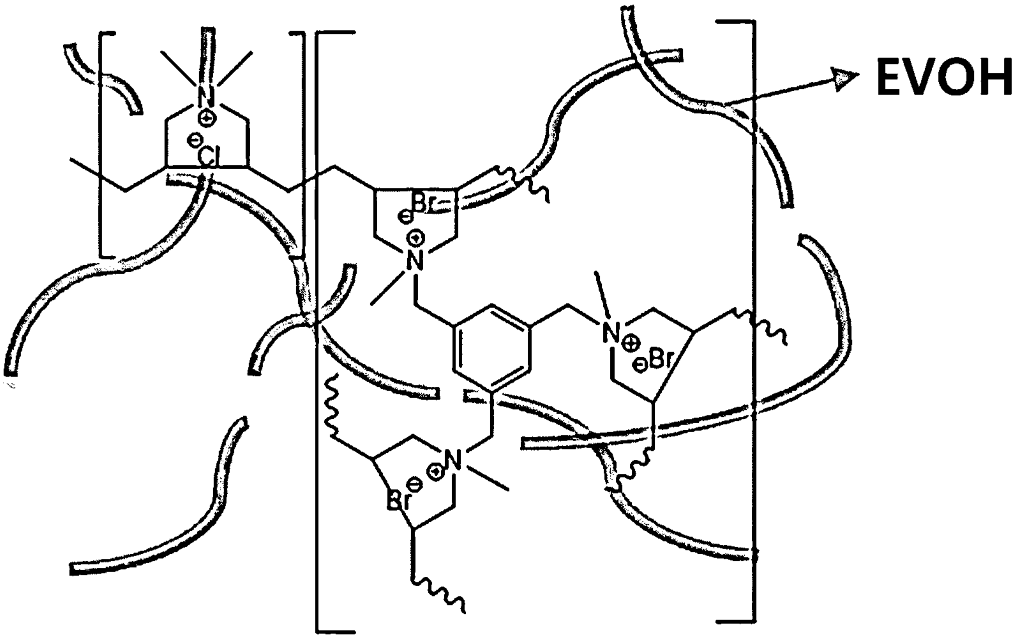

Subsequently, by mixing a glutaraldehyde crosslinking agent to crosslink hydroxyl groups of the ethylene-vinyl alcohol copolymer (EVOH), the anion exchange membrane according to Example 2 was manufactured.

**<Manufacturing Example 3> Preparation of anion exchange membrane (Comparative Example 1)**

An anion exchange membrane according to Comparative Example 1 was manufactured in the same manner as in Example 1, except that polyvinyl alcohol (PVA) was used instead of ethylene-vinyl alcohol copolymer (EVOH).

**<Experimental Example 1> Evaluation of mechanical strength of anion exchange membrane**

Mechanical strength was measured for the anion exchange membrane according to Example 1 and the anion exchange membrane according to Comparative Example 1. More specifically, a rectangular sample of 4 cm × 0.5 cm was fixedly installed to a tensile strength tester, and stress according to strain was measured. The results were shown in FIG. 1 and FIG. 2. FIG. 1 is a graph showing a result of measuring mechanical strength of an anion exchange membrane according to an embodiment of the present invention. FIG. 2 is a graph showing a result of measuring mechanical strength by EVOH content of an anion exchange membrane according to one embodiment of the present invention.

From FIG. 1, it can be confirmed that an anion exchange membrane according to Example 1 based on ethylene-vinyl alcohol copolymer (EVOH) has higher mechanical strength compared to an anion exchange membrane according to Comparative Example 1 based on polyvinyl alcohol (PVA). In addition, from FIG. 2, it can be seen that, as content of the ethylene-vinyl alcohol copolymer (EVOH) increases, excellent mechanical strength is exhibited.

**<Experimental Example 2> Evaluation 1 of ion exchange capability of anion exchange membrane**

The anion exchange membrane according to Example 1 was prepared such that content of the ethylene-vinyl alcohol copolymer (EVOH) was 50, 60, 65, 70, and 80 wt% based on the total weight of the anion exchange membrane, respectively. For the above anion exchange membrane, ion exchange capability was evaluated according to the following Equation 1 by acid-base titration using 1N NaOH aqueous solution and 1N HCl aqueous solution.

[Equation 1]

$$IEC=\{(V_{HCl}\times N_{HCl})-(V_{NaOH}\times N_{NaOH})\}/\text{Weight of sample (g)}$$

IEC: ion exchange capability (meq/g)
$V_{HCl}$: volume of HCl (ml), $V_{NaOH}$: volume of NaOH (ml)
$N_{HCl}$: concentration of HCl (N), $N_{NaOH}$: concentration of NaOH (N)

The results were shown in FIG. 3. FIG. 3 is a graph showing a result of evaluating ion exchange capability of an anion exchange membrane according to an embodiment of the present invention.

From FIG. 3, it can be seen that ion exchange capability may be controlled by adjusting content of the ethylene-vinyl alcohol copolymer (EVOH). In addition, it can be seen that, the smaller the content of the ethylene-vinyl alcohol copolymer (EVOH) and the higher the content of the cationic polymer, the higher the ion exchange capability, thereby exhibiting excellent ion conductivity. It can be seen that, when content of the ethylene-vinyl alcohol copolymer (EVOH) is 5 to 65 wt% based on the total weight of the anion exchange membrane, excellent ion conductivity is exhibited, and particularly, when the content is 50 wt%, the most excellent ion conductivity is exhibited.

**<Experimental Example 3> Evaluation 2 of ion exchange capability of anion exchange membrane**

The anion exchange membrane according to Example 1 was prepared such that content of the ethylene-vinyl alcohol copolymer (EVOH) was 50 wt% based on the total weight of the anion exchange membrane. For comparison, a commercial FAA-3 separator (manufacturer: fumasep) was prepared. For the above separators, ion exchange capability was evaluated by the same method as in Experimental Example 2.

The results were shown in FIG. 4 and FIG. 5. FIG. 4 is a graph showing a result of evaluating ion exchange capability according to immersion time in an alkaline aqueous solution of an anion exchange membrane and a commercial FAA-3 separator according to an embodiment of the present invention. FIG. 5 is a graph showing a result of evaluating ion conductivity retention according to immersion time in an alkaline aqueous solution of an anion exchange membrane and a commercial FAA-3 separator according to one embodiment of the present invention.

From FIG. 4 and FIG. 5, in the case of an anion exchange membrane according to an embodiment of the present invention, as immersion time in 1M KOH alkaline aqueous solution at 70°C increases, ion exchange capability and ion conductivity are constantly maintained, but in the case of the commercial FAA-3 separator, it can be confirmed that ion exchange capability and ion conductivity decrease according to immersion time in the alkaline aqueous solution.

**<Experimental Example 4> Evaluation of electrochemical properties of anion exchange membrane**

The anion exchange membrane according to Example 1 was prepared such that content of the ethylene-vinyl alcohol copolymer (EVOH) was 50, 60, 65, 70, and 80 wt% based on the total weight of the anion exchange membrane, respectively. Electrochemical properties were evaluated in 1M KOH electrolyte at 70°C by forming a two-electrode system (two-electrode membrane electrode assembly system) utilizing a membrane electrode assembly with the anion exchange membrane. The results were shown in FIG. 6. FIG. 6 is a graph showing water electrolysis performance, an I-V curve of an anion exchange membrane according to an embodiment of the present invention.

From FIG. 6, it can be seen that, when content of the ethylene-vinyl alcohol copolymer (EVOH) is 5 to 65 wt% based on the total weight of the anion exchange membrane, excellent ion conductivity and cell performance are exhibited, and when the content is 50 wt%, the most excellent ion conductivity and cell performance are exhibited.

While exemplary embodiments of the present disclosure have been described above with reference to the above-mentioned preferred embodiments, various modifications and alterations may be made without departing from the subject matter and the scope of the disclosure. Accordingly, the appended claims include the modifications or alterations as long as the modifications or alterations fall within the subject matter of the present disclosure.

## Claims

1. An anion exchange membrane, comprising:

    a cationic polymer; and
    an ethylene-vinyl alcohol copolymer (EVOH),
    wherein the cationic polymer and the ethylene-vinyl alcohol copolymer (EVOH) form an interpenetrating polymer network.

2. The anion exchange membrane of claim 1, wherein the cationic polymer is a copolymer of a primary halide and a tertiary amine, or a copolymer of diallyl amine and a cationic network polymer precursor (CNPP), and the cationic network polymer precursor (CNPP) is a compound including three or more ammonium groups.

3. The anion exchange membrane of claim 2, wherein the diallyl amine is diallyl dialkyl ammonium chloride represented by the following Chemical Formula 1:

[Chemical Formula 1]

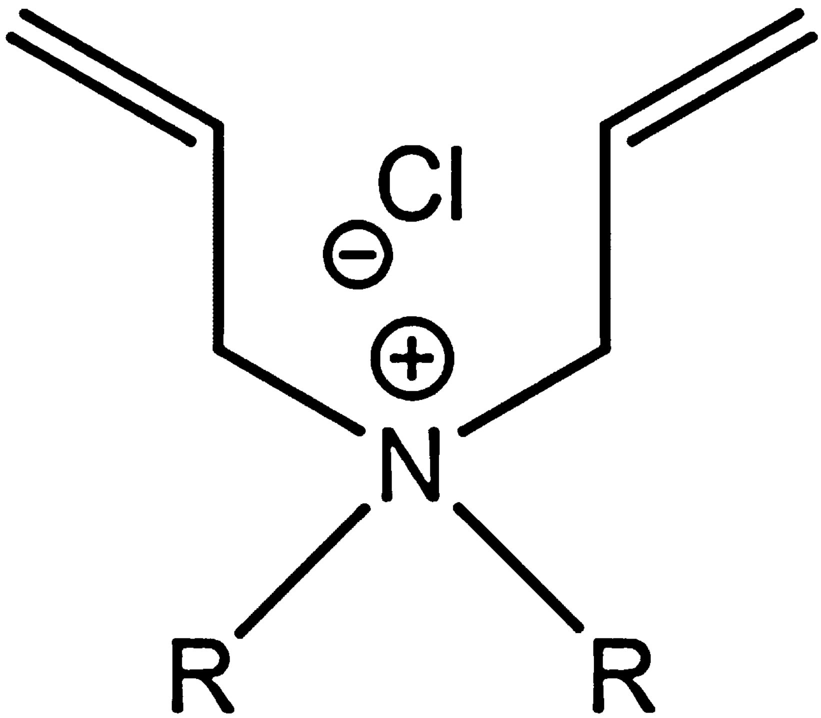

In Chemical Formula 1, R is $-(CH_2)_xCH_3$, $-(CH_2)_x(CF_2)_yCF_3$, or

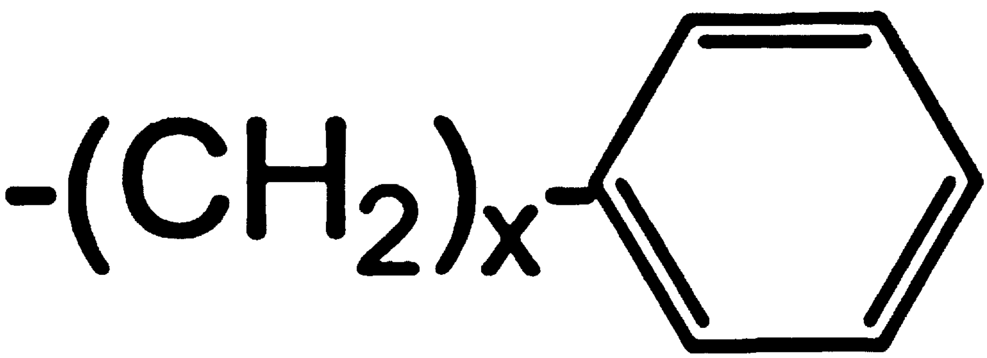

(wherein x and y are each independently an integer of 0 or more).

**4.** The anion exchange membrane of claim 1, wherein content of the ethylene-vinyl alcohol copolymer (EVOH) is 5 to 65 wt% based on a total weight of the anion exchange membrane.

**5.** The anion exchange membrane of claim 1, wherein an ethylene unit content of the ethylene-vinyl alcohol copolymer (EVOH) is 0 to 60 mol%.

**6.** The anion exchange membrane of claim 1, wherein the cationic polymer and the ethylene-vinyl alcohol copolymer (EVOH) do not include an aryl-ether bond.

**7.** A membrane electrode assembly, comprising the anion exchange membrane according to any one of claims 1 to 6.

**8.** A water electrolysis device, comprising the membrane electrode assembly of claim 7.

**9.** A fuel cell, comprising the membrane electrode assembly of claim 7.

**10.** A method for manufacturing an anion exchange membrane of any one of claims 1 to 6, comprising:

mixing a cationic polymer solution and an ethylene-vinyl alcohol copolymer (EVOH) solution to obtain a mixture; and

casting and drying the mixture on a glass plate to form an interpenetrating polymer network of the cationic polymer and the ethylene-vinyl alcohol copolymer (EVOH).

**11.** The method of claim 10, further comprising:
crosslinking hydroxyl groups of the ethylene-vinyl alcohol copolymer (EVOH) by mixing a glutaraldehyde crosslinking agent.

【FIG. 1】

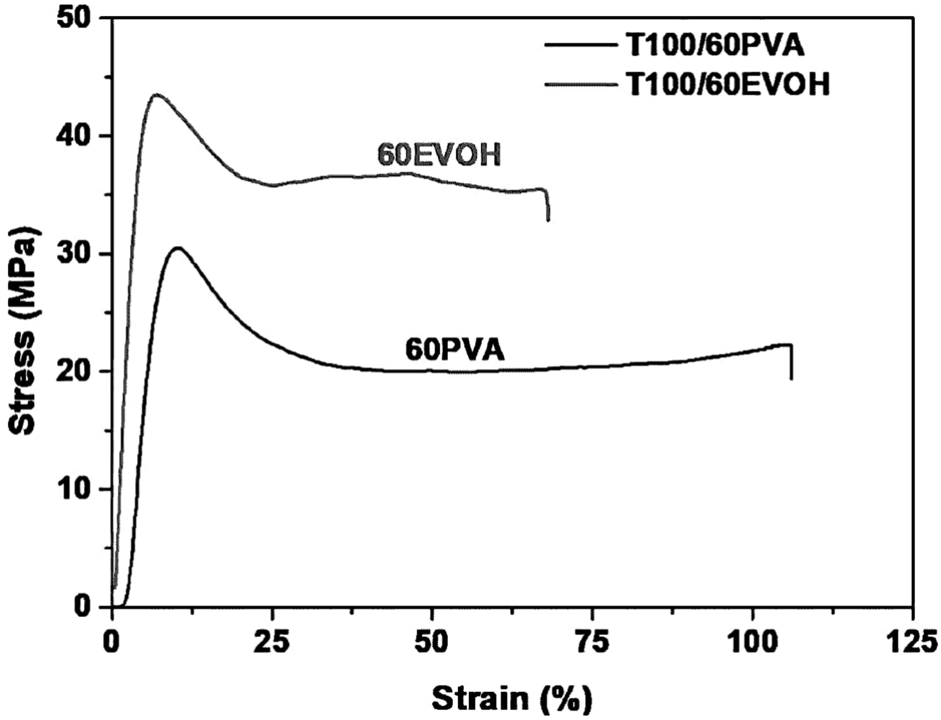
T100/60PVA
T100/60EVOH
60EVOH
60PVA
Stress (MPa)
Strain (%)
0
10
20
30
40
50
0
25
50
75
100
125

【FIG. 2】

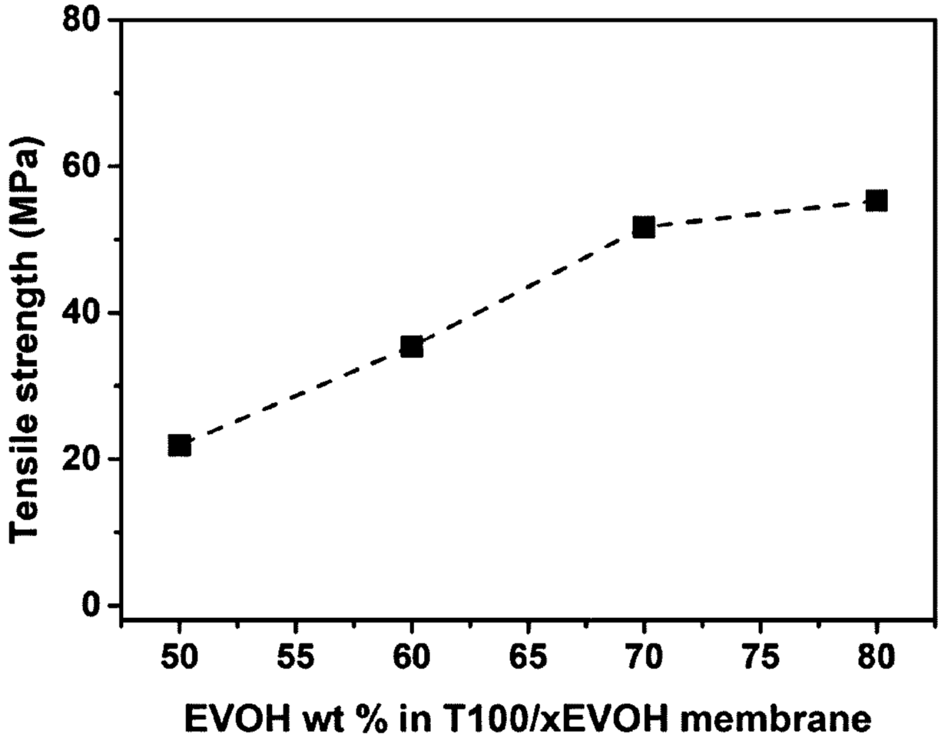
Tensile strength (MPa)
EVOH wt % in T100/xEVOH membrane
0
20
40
60
80
50
55
60
65
70
75
80

【FIG. 3】

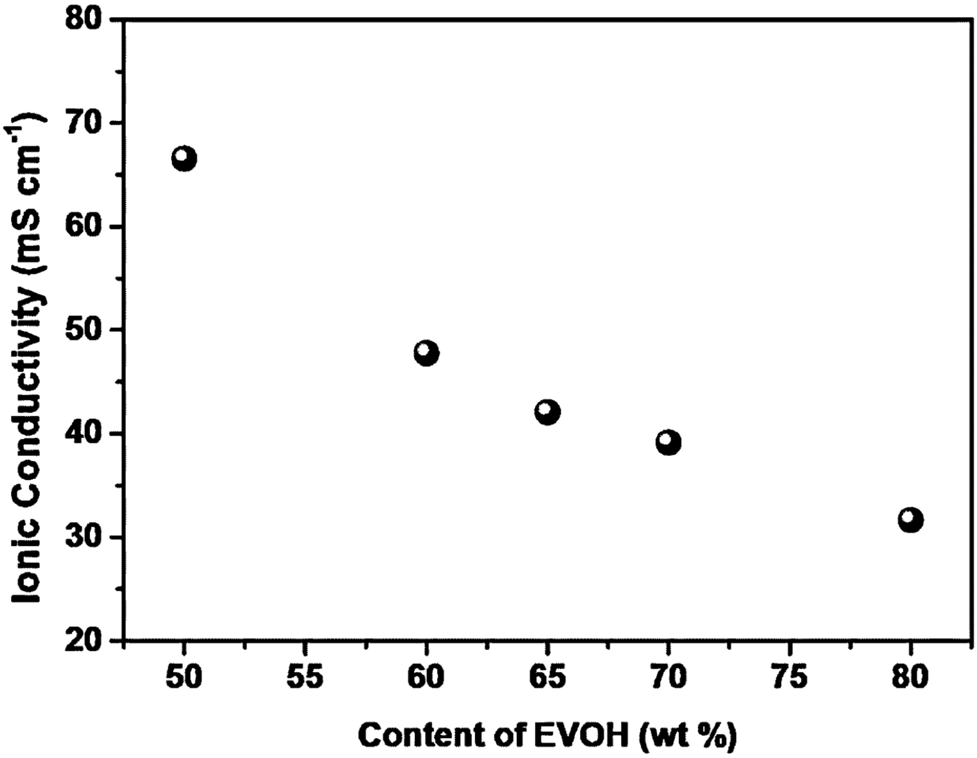
Ionic Conductivity (mS cm-1)
80
70
60
50
40
30
20
50
55
60
65
70
75
80
Content of EVOH (wt %)

【FIG. 4】

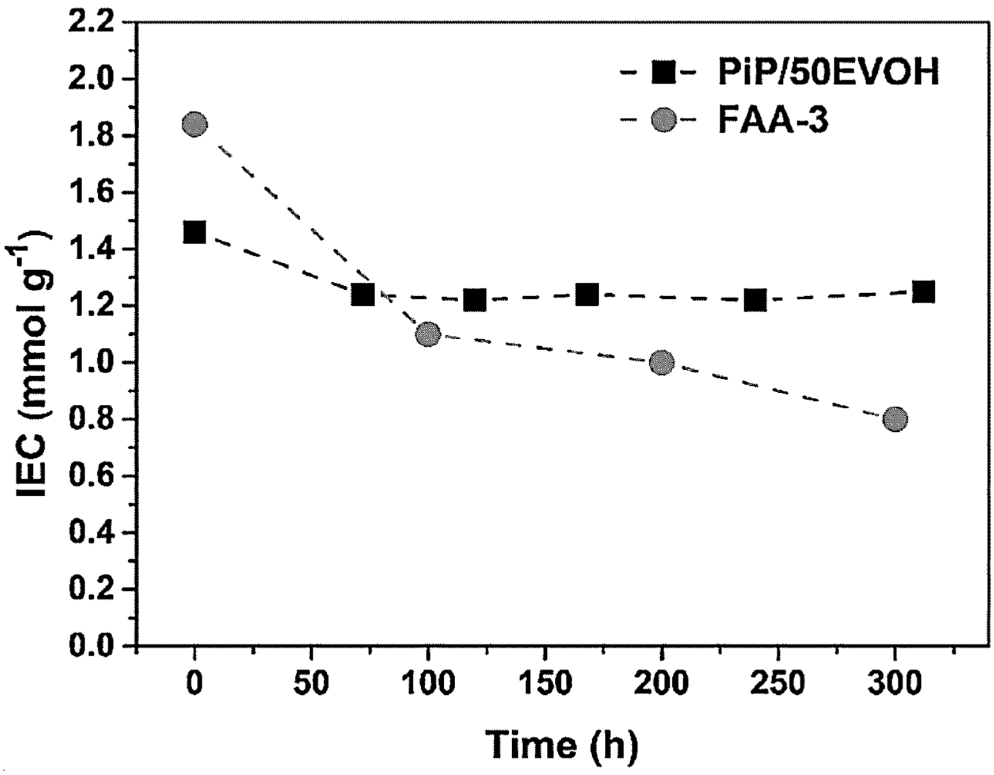
PiP/50EVOH
FAA-3
IEC (mmol g-1)
2.2
2.0
1.8
1.6
1.4
1.2
1.0
0.8
0.6
0.4
0.2
0.0
0
50
100
150
200
250
300
Time (h)

【FIG. 5】

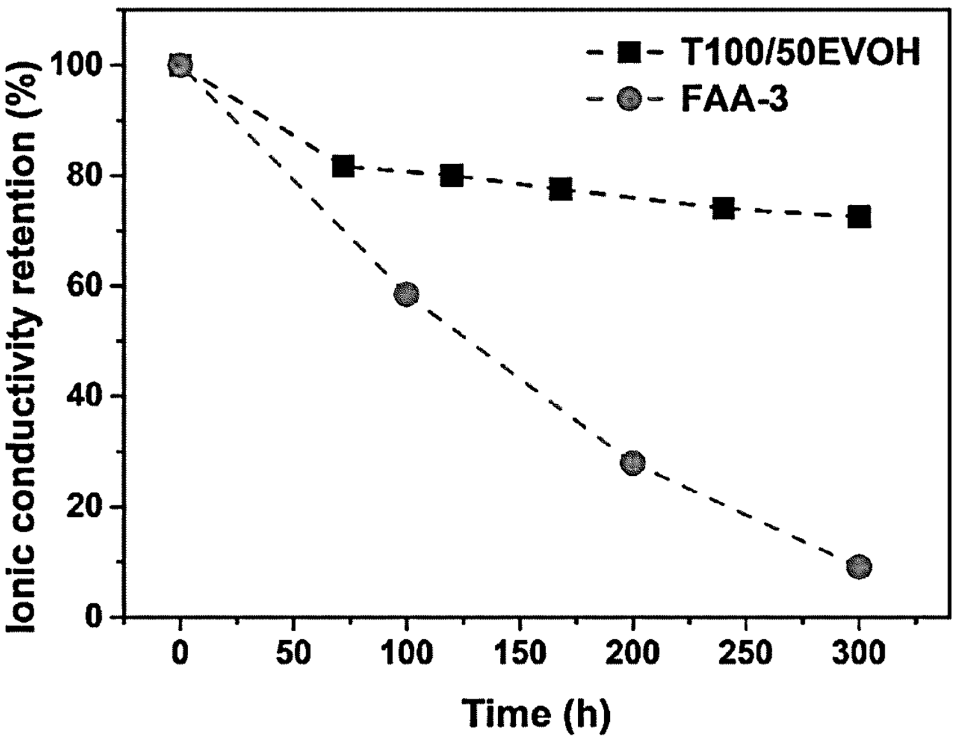
T100/50EVOH
FAA-3
Ionic conductivity retention (%)
100
80
60
40
20
0
0
50
100
150
200
250
300
Time (h)

【FIG. 6】

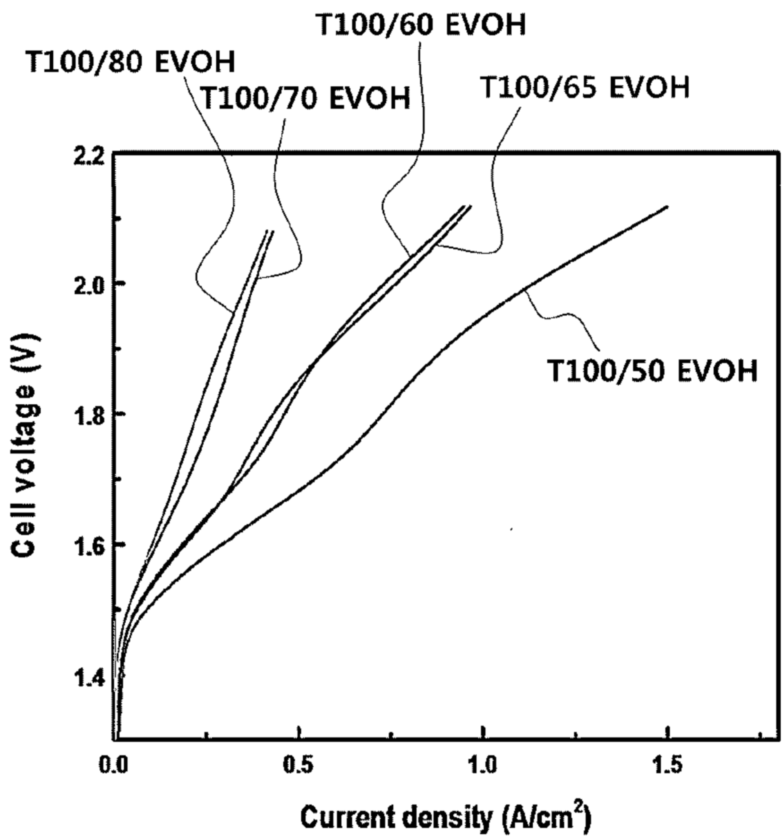
T100/80 EVOH
T100/70 EVOH
T100/60 EVOH
T100/65 EVOH
T100/50 EVOH
Cell voltage (V)
2.2
2.0
1.8
1.6
1.4
0.0
0.5
1.0
1.5
Current density (A/cm2)

**INTERNATIONAL SEARCH REPORT**

International application No. **PCT/KR2024/000197**

**A. CLASSIFICATION OF SUBJECT MATTER**

**C08J 5/22**(2006.01)i; **C08L 23/08**(2006.01)i; **C08L 101/00**(2006.01)i; **H01M 8/102**(2016.01)i; **C25B 1/04**(2006.01)i; **H01M 8/10**(2006.01)i

According to International Patent Classification (IPC) or to both national classification and IPC

**B. FIELDS SEARCHED**

Minimum documentation searched (classification system followed by classification symbols)

C08J 5/22(2006.01); B01D 61/42(2006.01); C08G 61/12(2006.01); H01M 10/26(2006.01); H01M 2/16(2006.01); H01M 8/02(2006.01); H01M 8/10(2006.01); H01M 8/1004(2016.01); H01M 8/1044(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, CAplus) & keywords: 음이온(anion), 교환막(exchange membrane), 양이온성 고분자(cationic polymer), 에틸렌 비닐 공중합체(ethylene vinyl copolymer)

**C. DOCUMENTS CONSIDERED TO BE RELEVANT**

| Category* | Citation of document, with indication, where appropriate, of the relevant passages | Relevant to claim No. |
|---|---|---|
| X | KR 10-2015-0099549 A (KURARAY CO., LTD. et al.) 31 August 2015 (2015-08-31) See claims 1, 10 and 13; and paragraphs [0026], [0150], [0151] and [0168]. | 1,4-7,10,11 |
| Y | | 2,8,9 |
| A | | 3 |
| Y | US 2019-0109310 A1 (DIOXIDE MATERIALS, INC.) 11 April 2019 (2019-04-11) See paragraphs [0076] and [0257]-[0266]. | 2 |
| Y | KR 10-2017-0020848 A (NITTO DENKO CORPORATION) 24 February 2017 (2017-02-24) See claims 5 and 6; and paragraphs [0036], [0040] and [0063]. | 8,9 |
| Y | KR 10-2018-0090356 A (NITTO DENKO CORPORATION) 10 August 2018 (2018-08-10) See claims 1, 2 and 8; and paragraphs [0049] and [0070]. | 8,9 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 April 2024** | **12 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/000197**

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0061829 A (INCHEON NATIONAL UNIVERSITY RESEARCH & BUSINESS FOUNDATION) 13 May 2022 (2022-05-13) See entire document. | 1-11 |

Form PCT/ISA/210 (second sheet) (July 2022)

**INTERNATIONAL SEARCH REPORT**
**Information on patent family members**

International application No.
**PCT/KR2024/000197**

| Patent document cited in search report | Publication date (day/month/year) | Patent family member(s) | Publication date (day/month/year) |
|---|---|---|---|
| KR 10-2015-0099549 A | 31 August 2015 | CN 104884510 A | 02 September 2015 |
| | | CN 104884510 B | 20 October 2017 |
| | | EP 2940068 A1 | 04 November 2015 |
| | | JP 6358597 B2 | 18 July 2018 |
| | | TW 201434935 A | 16 September 2014 |
| | | TW I616481 B | 01 March 2018 |
| | | US 10125036 B2 | 13 November 2018 |
| | | US 2015-0291452 A1 | 15 October 2015 |
| | | WO 2014-103819 A1 | 03 July 2014 |
| US 2019-0109310 A1 | 11 April 2019 | CN 110582869 A | 17 December 2019 |
| | | CN 110582869 B | 04 April 2023 |
| | | JP 2020-518964 A | 25 June 2020 |
| | | JP 7237852 B2 | 13 March 2023 |
| | | US 10147974 B2 | 04 December 2018 |
| | | US 10396329 B2 | 27 August 2019 |
| | | US 2018-0316063 A1 | 01 November 2018 |
| | | WO 2018-204242 A1 | 08 November 2018 |
| KR 10-2017-0020848 A | 24 February 2017 | CN 106463740 A | 22 February 2017 |
| | | CN 106463740 B | 30 July 2019 |
| | | EP 3157085 A1 | 19 April 2017 |
| | | EP 3157085 B1 | 04 September 2019 |
| | | JP 6064087 B2 | 18 January 2017 |
| | | US 2017-0047604 A1 | 16 February 2017 |
| | | US 9692072 B2 | 27 June 2017 |
| | | WO 2015-190074 A1 | 17 December 2015 |
| | | WO 2015-190075 A1 | 17 December 2015 |
| KR 10-2018-0090356 A | 10 August 2018 | CN 108391454 A | 10 August 2018 |
| | | EP 3392939 A1 | 24 October 2018 |
| | | JP 2017-107805 A | 15 June 2017 |
| | | US 10637087 B2 | 28 April 2020 |
| | | US 2018-0366754 A1 | 20 December 2018 |
| | | WO 2017-098732 A1 | 15 June 2017 |
| KR 10-2022-0061829 A | 13 May 2022 | KR 10-2509388 B1 | 14 March 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 102014970